(19) Europäisches Patentamt
European Patent Office
Office européen des brevets

(11) Publication number: **0 260 768 A2**

(12) **EUROPEAN PATENT APPLICATION**

(21) Application number: 87201786.8

(22) Date of filing: 18.09.87

(51) Int. Cl.[4]: C08G 59/62 , //(C08G59/62,C08K5:13)

(30) Priority: 19.09.86 GB 8622654

(43) Date of publication of application: 23.03.88 Bulletin 88/12

(84) Designated Contracting States: BE DE ES FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Raudenbusch, Werner Theodor
Badhuisweg 3
NL-1031 CM Amsterdam(NL)
Inventor: Noordam, Arend
Badhuisweg 3
NL-1031 CM Amsterdam(NL)
Inventor: Verburg, Antoon
Badhuisweg 3
NL-1031 CM Amsterdam(NL)
Inventor: De Kruif, Jan Hendrik
Badhuisweg 3
NL-1031 CM Amsterdam(NL)

(74) Representative: Aalbers, Onno et al
P.O. Box 302
NL-2501 CH The Hague(NL)

(54) **Casting of epoxy resins.**

(57) 1. A process for producing epoxy resin castings which comprises the curing of a normally liquid epoxy resin with 0.6 to 1 equivalent of a compound of the general formula

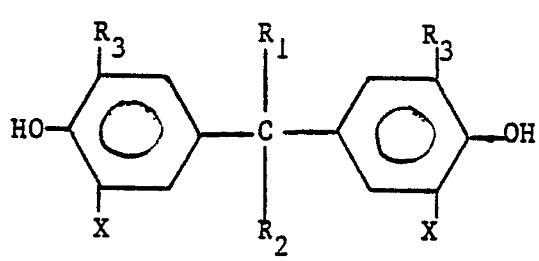

in which $R_1$ and $R_2$ are hydrogen, aryl, cyclo alkyl or alkyl with 1 to 6 carbon atoms, $R_3$ represents hydrogen and X is chlorine or bromine, the compound having a melting point of less than 100 °C.

EP 0 260 768 A2

## CASTING OF EPOXY RESINS

This invention is concerned with a process for casting epoxy resins employing a defined group of bisphenols as curing agent.

Epoxy resin casting systems are widely employed in the electrical industry for the encapsulation of various electrical components.

Encapsulation comprises the casting of the resin system all around an electrical component, the normal way of curing the resin is by heating. As curing agent bisphenols are of particular interest, i.a. because of an attractive pot-life and the possibility to impart a glass transition temperature of at least 100 °C to the cured resins. Another important requirement is that the cured product should have a good crack resistance. For easier processing it is preferred to employ epoxy resins that are normally liquid at room temperature.

Various bisphenols that have been proposed in the past have the drawback that they pose a problem in their homogeneous dispersion in to the epoxy resin. Alternatively, when homogeneously dispersing would be possible many of the known bisphenols show a tendency towards crystallizing from the liquid curing systems. Therefore the preparation, storage and processing of known systems have to take place at a rather elevated temperature, i.e. 110 °C and above, which is not only inconvenient but also reduces pot-life.

Investigations by the Applicants have shown that these problems can be overcome when using a special, narrowly defined group of substituted bisphenol curing agents and the invention is therefore concerned with a process for producing epoxy resin castings which comprises the curing of a normally liquid epoxy resin with 0.6 to 1 equivalent of a compound of the general formula

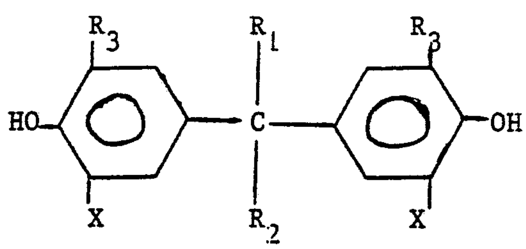

in which $R_1$ and $R_2$ are hydrogen, aryl, cyclo alkyl or alkyl with 1 to 6 carbon atoms, $R_3$ represents hydrogen and X is chlorine or bromine, the compound having a melting point of less than 100 °C.

The curing systems of this invention are easy to prepare and process, pose no pot-life problem and are eminently suitable for preparing cured resins which combine the desired high glass transition temperature with an excellent crack resistance.

Normally liquid epoxy resins that can be used in the process of this invention are well-known in the market. Preferred resins are the diglycidylethers of bis-(4-hydroxyphenyl)alkanes, in particular 2,2-bis-(4 hydroxyphenyl)propane.

Next to the curing component the resin system may contain other components e.g. curing catalysts, colouring agents, diluents, extenders or fillers.

In the bisphenolic compounds of this invention it is essential that the halogen atoms, preferably bromine, are in o-position in respect of the hydroxyl groups. It is also essential that the other o-positions are unsubstituted, for the applicants have found that when that position is substituted, an unacceptable decrease of the glass transition temperature of the cured resin results. Preferred groups $R_1$ and $R_2$ are methyl groups but use of other compounds, e.g. in which $R_1$ is methyl and $R_2$ is ethyl or n-hexyl is not excluded provided these compounds have a melting point of less than 100 °C. The most preferred compound is 2,2-bis-(3-bromo, 4-hydroxyphenyl)propane.

The invention is illustrated hereinafter by means of comparative data.

Example

Various bisphenols were blended into EPIKOTE 828, which is a commercial diglycidylether of 2,2-bis-(4-hydroxyphenyl)propane with an epoxy equivalent weight of 182-194 g. From 0.75 to 0.85 equivalent hydroxy per epoxy was applied as blending ratio. x%wt of curing catalysts were also incorporated. These were either N-butylimidazole (NBZ, x = 0.4) or the commercial $BF_3$-amine adduct ANCHOR 1222 (ANC, x

= 3.0). The bisphenols tested in accordance with this invention were 2,2-bis(3-bromo, 4-hydroxyphenyl)-propane (BDPP) and for comparison 2,2-bis(4-hydroxylphenyl)propane (DPP) 2,2-bis(3,5-dibromo, 4-hydroxyphenyl)propane (TBDP), 2,2-bis(3-sec.butyl-4-hydroxylphenyl)propane (SDPP), 2-2-bis(4-hydroxyphenyl) butane (DPB) and 2,2-bis(3-bromo, 5-sec.butyl, 4-hydroxyphenyl)propane (BSDP).

Curing schedules, blending temperatures and the relevant experimental results are included in Table 1. It appears that DPP necessitates a high processing temperature in order to obtain a hoogeneous blend, so does TBDP and DPB. The desired combination of low processing temperature, Tg above 100 °C, and good crack resistance was only found for BDPP, the compound claimed in this invention. Admittedly, TBDP does produce an attractive Tg, however both the processing temperature and the crack resistance are not acceptable.

The melting points included in Table I are those of the respective phenols. It would seem that the best candidate is BSDP, since being liquid at room temperature. However this compound fails because of decomposition of the blend occurring upon storage. Both Tg and crack resistance data are therefore irrelevant.

Table I

| Cpd* | M-pt, 0°C | OH/ep eq ratio | Blend temp., °C | Cat. | Cure schedule hrs/°C | Tg °C | Crack resistance |
|---|---|---|---|---|---|---|---|
| DPP* | 157 | 0.75 | 110 | NBI | 3/80 + 16/120 | 99 | good |
| TBDP* | 180 | 0.85 | 125 | ANC | 5/125 + 16/140 | 120 | medium |
| SDPP* | 88 | 0.70 | 80 | NBI | 4/80 + 16/140 | 81 | - |
| DPB* | 129 | 0.70 | 100 | NBI | 4/80 + 16/140 | 100 | - |
| BSDP* | liq. (<25) | 0.85 | 40 | NBI | not relevant | | |
| BDPP | 92 | 0.85 | 80 | NBI | 2/100 + 16/140 | 108 | excellent |

* for comparison

## Claims

1. A process for producing epoxy resin castings which comprises the curing of a normally liquid epoxy resin with 0.6 to 1 equivalent of a compound of the general formula

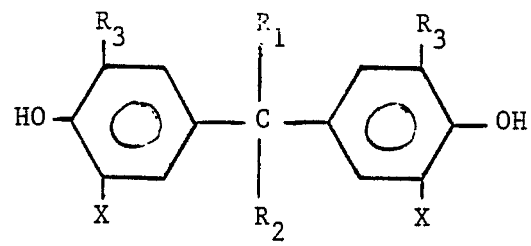

in which $R_1$ and $R_2$ are hydrogen, aryl, cyclo alkyl or alkyl with 1 to 6 carbon atoms, $R_3$ represents hydrogen and X is chlorine or bromine, the compound having a melting point of less that 100 °C.

2. A process as claimed in claim 1, in which the epoxy resin is the diglycidyl ether of 2,2-bis(4-hydroxyphenyl)propane.

3. A process as claimed in claim 1 or 2, in which the curing is effected in the presence of a curing catalyst.

4. A process as claimed in any of claims 1 to 3 in which the compound is 2,2-bis(3-bromo, 4-hydroxyphenyl)propane.

5. A process for the encapsulation of electrical components which comprises casting the curable system defined in any one of claims 1 to 4 around an electrical component and curing the resin system.